# EUROPEAN PATENT SPECIFICATION

(11) **EP 0 551 426 B1**
(45) Date of publication and mention of the grant of the patent: **01.03.1995**
(21) Application number: 91919410.0
(22) Date of filing: 03.10.1991
(51) Int. Cl.: F16B 37/14

(54) **A FIXING DEVICE**
BEFESTIGUNGSVORRICHTUNG
DISPOSITIF DE FIXATION

(30) Priority: 12.10.1990 GB 9022204; 28.05.1991 GB 9111464
(43) Date of publication of application: 21.07.1993
(73) Proprietor: PRIESTLEY CROSSLEY LIMITED, Hebden Bridge, West Yorkshire HX7 5EY (GB)
(72) Inventor: CROSSLEY, David Michael, Hebden Bridge, West Yorkshire HX7 5AZ (GB); CROSSLEY, Robert Nigel, Hebden Bridge, West Yorkshire HX7 5BD (GB); CROSSLEY, Jack, Hebden Bridge, West Yorkshire HX7 5AZ (GB)
(74) Representative: Bray, Lilian Janet
(86) International application number: GB9101709
(87) International publication number: WO9207198

(56) References cited:
- EP-A- 0 125 040
- BE-A- 661 354
- GB-A- 603 268
- GB-A- 850 856

## Description

The present invention relates to a fixing device and, in particular, to a device for attaching items to a wall or other surface.

When it is desired to mount items on a wall the conventional fixing means used is either a screw or a nail. However, as it usually necessary to produce a decorative or aesthetically pleasing result, screws are most often used, the head of the screw being hidden by a cap.

Such an arrangement is described in U.K. Patent GB-A-603,268, which is particularly directed to a means for fixing mirrors and other panels of glass, marble or imitation marble. In this arrangement, the fixing screw is passed through a sleeve which is threaded on its outer surface and at one end surrounds the conical head of the screw. At its other end, the sleeve has an exterior conical portion which corresponds with the conical part of the screw head so that it will abut in a countersunk seat formed at the mouth of a hole in the mirror or the like into which the screw is fixed. A cap is then screwed to the sleeve to conceal the head of the screw.

In contrast, the present invention has been developed with a view to providing a fixing device of more general application which is decorative in use and which in certain embodiments can be augmented to provide a range of items such as coat hooks, rails, handles, wine racks and the like which can be constructed or demounted as desired simply by the attachment of the appropriate parts to the already positioned device in the wall.

According to the present invention there is provided a fixing device comprising an engagement means in the form of a screw or a nail with a head and a body to retain the device and thereby an item in a fixed position with respect to a wall or other surface, a collar which has a screw-threaded portion located around the engagement means adjacent the head and which is internally chamfered at one end to effect a countersinking to accommodate the head of the screw or nail, and a head attachment which can be screwed to the collar to cover the head and to provide a decorative finish to the fixing device, and characterised in that the collar is internally chamfered identically at both ends to provide the countersinking at said one end and an annular projection at the other end which can bite into the wall or other surface.

The identical chamfer at both ends of the collar means that the screw or nail can be inserted into either end of the collar making it quick and easy to use. In addition, unlike the prior art arrangement the annular projection bites into the wall as the screw or nail is fixed into position thus preventing the collar from rotating about the screw or nail head both when the head attachment screwed to the collar and thereafter.

Preferably, the head attachment is secured to the collar in such a way as to leave a gap between the adjacent surfaces of the head attachment and the wall or other surface to which the device is fixed.

The present invention will now be described by way of example with reference to the accompanying drawings, in which:-
Figure 1 is a part cross-sectional view of a fixing device according to the present invention; and
Figure 2 is a cross-sectional view of an alternative collar for use as part of the device shown in Figure 1; and
Figure 3 is a partical view showing a means whereby the fixing device of the invention can be developed to support other parts.

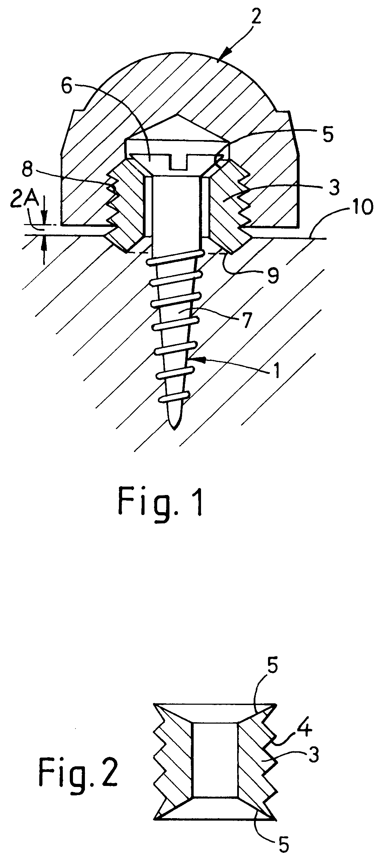

With reference to Figure 1, the invention comprises a screw 1 with a screw-on decorative head attachment or cover 2. The screw 1 is provided with a metallic cup-shaped cylindrical collar 3 which has an exterior screw-thread 4. The interior of the collar 3 is chamfered as at 5 to effect a countersinking to accommodate the head 6 of the screw snugly and the collar 3 locates around the body 7 of the screw-threaded portion of the screw 1 adjacent the head 5. The cover or head attachment 2 comprises a cup-shaped boss with a cylindrical internally screw-threaded aperture 8 therein. Hence, in use, after the screw 1 and the collar 3 have been secured to a wall, the cover 2 is screwed over the collar 3 to hide the screw head 6 and provide the desired decorative effect.

The end of the collar 3 opposite the screw head 5 is chamfered internally and externally to provide an annular projection 9 which bites into the wall when the screw 1 is tightened in position. This assists in holding the collar 3 in place to prevent the collar 3 and the cover 2 from being rotatable about the screw head 6.

As shown in Figure 1, the collar 3 is internally and externally chamfered identically at both ends to enable the head 6 of the screw 1 to be accommodated in a countersunk portion of the collar 3 at one end and provide the annular projection 9 at the other. This has the advantage that it does not matter which way the screw 1 is inserted into the the collar 3 making it quicker and easier for the user.

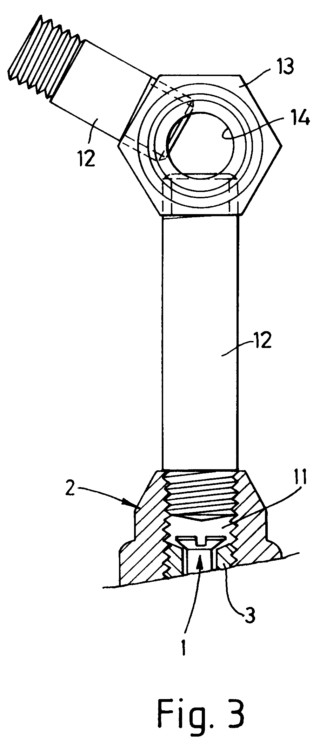

Alternatively, as shown in Figure 2, the collar can be internally chamfered identically at both ends, but not externally chamfered as shown in Figure 1, the chamfer 5 at one end again effecting the countersinking to accommodate the head 6 of the screw 1 whereas the chamfer at the other end provides the annular projection.

As shown in Figure 1, the length of the screw-threaded portion of the collar 3 is made slightly greater than the length of the screw-threaded aperture 8 in the head attachment 2. This ensures that a small gap 2A is left between the head attachment 2 and the surface 10 after the attachment 2 has been fully screwed on to the collar 3 to prevent the frictional engagement between the collar 3 and the surface 10 being weakened.

The invention can be expanded as shown in Figure 3. Here, the collar 3 which fits around the screw 1 is longer and the head attachment 2 comprises a boss with a cylindrical internally screw-threaded aperture 11 formed all the way through it. In use, the boss 2 is screwed over the collar 3, as before, but so that other attachments can also be screwed into the aperture 11. In Figure 3 are shown externally screw-threaded rods 12 and an example of a nut 13 provided with several internally screw-threaded apertures 14. The collar 3, the rods 12 and the nut 13 can be screwed together to form part of a kit of parts enabling items such as a wine-rack, a rail, or a set of hooks, for example, to be attached to the screw 1 and several like it, as desired. The kit of parts is simply mounted on or demounted from the fixing device at will.

It will be appreciated that apart from having a single aperture 11, the head attachment or boss 2 could be tapped at any location on its surface to enable other components of a kit of parts to be screwed to it out of alignment with the screw 1.

Instead of using a screw 1 with the fixing device of the invention it will be appreciated that a nail could also be used. In these circumstances the collar is preferably a two-part collar having a inner substantially cylindrical resilient plastics portion which is push-fitted into an outer metallic sleeve. The plastics portion preferably has a longitudinal aperture with a diameter slightly less than the diameter of the nail to be used therewith. The nail then frictionally engages with the collar to prevent the collar from being easily rotatable about the stem of the nail. The metallic outer sleeve is provided with an external screw-thread.

Alternatively, the collar can be made wholly of a plastics material.

When used with either nails or screws, the head attachment 2 for the fixing device can be made in any decorative shape with ornamentation if appropriate. It can also be made an appropriate shape to serve a specific purpose. For example, if the head attachment is provided with an annular groove, the device can be used for hanging pictures or mirrors by means of a decorative cord or chain which can locate in the groove. In another application, the head attachment can be shaped so that it can be used as a door knob for a cupboard. This has the advantage that the fixing device does not show through on the inside of the door.

In a modification suitable for use with a large head attachment, for example for use as a knob on a banister or similar, the collar 3 can be made sufficiently large to accommodate a plurality of screws or nails. Three screws or nails would be appropriate for a banister knob. It is also possible to use the device to fix a light fitting and here the collar 3 could be provided with sufficient screws to support the fitting as well as a central aperture through which electrical wiring could be threaded.

When necessary, a washer can be used with the device and this can also be made decorative and part of the overall design of the device.

Whilst it is anticipated that the head attachment and collar will be made of metal in most cases, it is also envisaged that a plastics material, such as nylon, could be used.

The invention is suitable for use with any type of screw or nail. For example, wood screws can be used for attachment of items via the fixing device to wooden surfaces but self-tapping screws can be used for attachment to metal surfaces.

## Claims

1. A fixing device comprising an engagement means in the form of a screw (1) or a nail with a head (6) and a body (7) to retain the device and thereby an item in a fixed position with respect to a wall or other surface (10), a collar (3) which has a screw-threaded portion (4) located around the engagement means (1) adjacent the head (6) and which is chamfered internally at one end to effect a countersinking (5) to accommodate the head (6) of the screw (1) or nail (15), and a head attachment (2) which can be screwed to the collar (3) to cover the head (6) and to provide a decorative finish to the fixing device, and characterised in that the collar is internally chamfered identically at both ends to provide the countersinking (5) at said one end and an annular projection (9) at the other end which can bite into the wall or other surface (10).

2. A device as claimed in Claim 1, characterised in that the collar (3) is chamfered both internally and externally.

3. A device as claimed in Claim 1 or 2, characterised in that the head attachment (2) is secured to the collar (3) in such a way as to leave a gap (2A) between the adjacent surfaces of the head attachment (2) and the wall or other surface (10) to which the device is fixed.

4. A device as claimed in Claim 3, characterised in that the head attachment (2) has a screw-threaded aperture (8) to engage with the screw-threaded portion (4) of the collar (3), the length of the screw thread on the head attachment (2) being less than that on the collar (3) to enable the gap (2A) to be formed between the head attachment (2) and the wall or other surface (10) when the attachment (2) is screwed on to the collar (3).

5. A device as claimed in any one of Claims 1 to 4, characterised in that the collar (3) includes a plastics insert.

6. A device as claimed in Claim 5, characterised in that the aperture in the plastics insert through which the body (2) of the screw (1) or nail passes has an initial diameter less than that of the body (2) so as to frictionally engage same.

7. A device as claimed in Claim 5 or Claim 6, characterised in that the plastics insert is substantially cylindrical and push-fitted inside an outer sleeve.

8. A device as claimed in any one of Claims 1 to 7, characterised in that the head attachment (2) is tapped to enable a functional article (12,13) to be attached directly to it.

## Patentansprüche

1. Befestigungsvorrichtung bestehend aus einem Haltemittel in der Form einer Schraube (1) oder eines Nagels mit einem Kopf (6) and einem Körper (7) zum Festhalten der Vorrichtung und somit eines Gegenstandes in einer festgelegten Position in bezug auf eine Wand oder eine andere Fläche (10), einer Manschette (3) mit einem am Kopf (6) und um das Haltemittel (1) herum liegenden Schraubgewindeteil (4), welche an einem Ende innerlich ausgekehlt ist um eine Versenkung (5) zu schaffen zur Aufnahme des Kopfes (6) der Schraube (1) oder des Nagels (15), und einem Kopfaufsatz (2), welcher auf die Manschette (3) aufgeschraubt werden kann um so den Kopf (6) zu verdecken und der Befestigungsvorrichtung einen dekorativen Abschluß zu geben, **dadurch** **gekennzeichnet**, **daß** die Manschette an beiden Enden innerlich identisch ausgekehlt ist um eine Versenkung (5) an dem vorgenannten einen Ende und einen ringförmigen Vorsprung (9) an dem anderen Ende, welches sich in der Wand oder einer anderen Fläche (10) festsetzen kann, zu erstellen.

2. Vorrichtung nach Anspruch 1, **dadurch gekenn****zeichnet, daß** die Manschette (3) sowohl innerlich als auch äußerlich ausgekehlt ist.

3. Vorrichtung nach Anspruch 1 oder 2, **dadurch ge****kennzeichnet, daß** der Kopfaufsatz (2) derart an der Manschette (3) angelegt ist, daß ein Zwischenraum (2A) erhalten bleibt zwischen den angrenzenden Flächen des Kopfaufsatzes (2) und der Wand oder anderen Fläche (10) an welcher die Vorrichtung befestigt wird.

4. Vorrichtung nach Anpruch 3, **dadurch gekennzeich****net, daß** der Kopfaufsatz (2) mit einer Schraubgewindeöffnung (8) versehen ist, welche sich mit dem Schraubgewindeteil (4) der Manschette (3) verbindet, und daß die Länge des Schraubgewindes am Kopfaufsatz (2) kürzer ist als an der Manschette (3), um so den Zwischenraum (2A) zwischen dem Kopfaufsatz (2) und der Wand oder sonstigen Fläche (10) zu schaffen wenn der Aufsatz (2) auf die Manschette (3) aufgeschraubt wird.

5. Vorrichtung nach einem der Ansprüche 1 bis 4, **dadurch gekennzeichnet, daß** die Manschette (3) eine Plastikeinlage enthält.

6. Vorrichtung nach Anspruch 5, **dadurch gekenn****zeichnet, daß** der Durchmesser der Öffnung in der Plastikeinlage, durch welche der Körper (2) der Schraube (1) oder des Nagels hindurchführt wird, kleiner ist als der des Aufsatzes (2), um sich so reibungskräftig zu verbinden.

7. Vorrichtung nach Anspruch 5 oder Anspruch 6, **da****durch gekennzeichnet, daß** die Plastikeinlage im wesentlichen zylindrisch ausgebildet ist und in eine äußerliche Hülse hineingepreßt ist.

8. Vorrichtung nach einem der Ansprüche 1 bis 7, **dadurch gekennzeichnet, daß** der Kopfaufsatz (2) mit einem Gewinde versehen ist, so daß ein funktioneller Gegenstand direkt an ihm festgelegt wrden kann.

## Revendications

1. Dispositif de fixation comprenant un moyen d'engagement sous la forme d'une vis (1) ou d'un clou ayant une tête (6) et un corps (7) pour retenir le dispositif et par là un article en position fixe par rapport à une paroi ou à une autre surface (10), une douille (3) qui a une partie filetée (4) située autour du moyen d'engagement (1) à proximité de la tête (6) et qui est fraisée intérieurement à une extrémité pour présenter un chanfrein (5) recevant la tête (6) de la vis (1) ou du clou (15), et un couvre-tête (2) qui peut être vissé sur la douille (3) pour couvrir la tête (6) et pour constituer une finition décorative pour le dispositif de fixation, et caractérisé en ce que la douille est fraisée intérieurement de façon identique aux deux extrémités pour présenter le chanfrein (5) à une extrémité précitée et une saillie annulaire (9) à l'autre extrémité, qui peut mordre dans la paroi ou autre surface (10).

2. Dispositif selon Revendication 1, caractérisé en ce que la douille (3) est fraisée à la fois intérieurement et extérieurement.

3. Dispositif selon Revendication 1 ou 2, caractérisé en ce que le couvre-tête (2) est fixé à la douille (3) de manière à laisser un espace (2A) entre les surfaces adjacentes du couvre-tête (2) et la paroi ou autre surface (10) à laquelle est fixé le dispositif.

4. Dispositif selon Revendication 3, caractérisé en ce que le couvre-tête (2) a une ouverture filetée (8) pour s'engager avec la partie filetée (4) de la douille (3), la longueur du filetage sur le couvre-tête (2) étant plus courte que sur la douille (3) afin de permettre la formation de l'espace (2A) entre le couvre-tête (2) et la paroi ou autre surface (10) lorsque le couvre-tête (2) est vissé sur la douille (3).

5. Dispositif selon l'une quelconque des Revendications 1 à 4, caractérisé en ce que la douille (3) comprend un insert en plastique.

6. Dispositif selon Revendication 5, caractérisé en ce que l'ouverture dans l'insert en plastique par laquelle passe le corps (2) de la vis (1) ou du clou a un diamètre initial inférieur à celui du corps (2) de manière à s'engager dans celui-ci avec du frottement.

7. Dispositif selon Revendication 5 ou Revendication 6, caractérisé en ce que l'insert en plastique est substantiellement cylindrique et enfoncé par pression à l'intérieur d'un manchon extérieur.

8. Dispositif selon l'une quelconque des Revendications 1 à 7, caractérisé en ce que le couvre-tête (2) est taraudé pour permettre à un article fonctionnel (12,13) d'y être fixé directement.
